Europäisches Patentamt

European Patent Office

Office européen des brevets

(19)

(11) Publication number: **0 052 679**
**B1**

(12) **EUROPEAN PATENT SPECIFICATION**

(45) Date of publication of patent specification: **20.07.83**  (51) Int. Cl.³: **F 04 B 43/14, F 16 K 11/02**

(21) Application number: **80304192.0**

(22) Date of filing: **21.11.80**

(54) Material handling device.

(43) Date of publication of application:
**02.06.82 Bulletin 82/22**

(45) Publication of the grant of the patent:
**20.07.83 Bulletin 83/29**

(84) Designated Contracting States:
**AT BE CH DE FR GB IT LI NL SE**

(56) References cited:
· DE - A - 2 244 365
DE - A - 2 257 618
DE - A - 2 805 135
FR - A - 1-394 047
FR - A - 2 286 995
NL - C - 21 005

(73) Proprietor: **GALLAHER LIMITED**
**65 Kingsway**
**London WC2B 6TG (GB)**

(72) Inventor: **Sumner, Leslie**
**Buckland Lodge Lansdown**
**Bath BA1 5TD (GB)**

(74) Representative: **Allen, William Guy Fairfax et al,**
**J.A. KEMP & CO. 14 South Square Gray's Inn**
**London WC1R 5EU (GB)**

Material handling device

The present invention relates to material handling devices such as pumps or motors.

Rotary pumps has already been proposed, the so-called peristaltic type, which use a flexible tube bent in the arc of a circle, the tube being squeezed by a plurality of rollers carried on a rotating member which makes contact with the tube at angularly spaced positions. This results in "slugs" of the fluid carried in the tube being carried forward from the inlet of the tube to its outlet.

Such pumps are particularly suitable for services which require the fluid being pumped to be kept isolated from the mechanism itself, but its disadvantage is that the tube, if not restrained, "walks" in the direction of the outlet. In consequence, the anchoring of the tube to prevent this is a problem which increases with the size of the tube and the viscosity of the fluid being pumped. It is a further disadvantage of this type of pump, that, when pumping "heavy" substances, such as concrete, the tube tends to collapse at the inlet end and it is necessary to evacuate the chamber in which the pump tube operates in order to overcome this tendency.

Another disadvantage of this type of pump is the large effort required to distort the tube, especially when heavy duty tubes are used, e.g. in pumping concrete, which results in low mechanical efficiencies.

Diaphragm pumps have also been proposed, such as in German Patent 6243, British Patent Nos. 208,477; 562,409, French Patent No. 1394047 and United States Patent No. 2,794,400. These pumps include a housing having an internal surface, and a flexible resilient diaphragm mounted within the housing and secured thereto to form with the internal surface a chamber. First and second ports communicate with the chamber and a number of deflectors are each operable sequentially on the face of the diaphragm remote from the chamber, to urge the diaphragm towards the internal surface to form a closure or constriction which traverses the chamber. The closures or constrictions each move from the first to the second port, one of the closures being terminated after the succeeding closure has been initiated. A disadvantage of such a construction is that there is a necessity for the diaphragm to be resilient, to enable it to take up the necessary shapes, and there is a tendency for the diaphragm to flex towards the lower pressure side of the pump, thus causing the "slug" of material being pumped to be of small volume. For this reason, pumps of this nature are limited both in their size and by the low rotational speeds at which they can operate.

It is now proposed, according to the present invention, for flexible diaphragms to be longitudinally reinforced so as to be substantially longitudinally inextensible and for the configuration of the device to be such that, as said deflectors move sequentially along a path on said surface of the diaphragm remote from the chamber, the sum of the distances, measured along the diaphragm, between the clamping points at the longitudinal ends of the diaphragm and the deflector means adjacent thereto, and, where appropriate, between the adjacent deflector means in contact with the diaphragm, remains substantially constant.

The result of the construction of the present invention is that, because the length of the diaphragm remains substantially constant, whatever the position of deflector means, the diaphragm is prevented from collapsing into the reduced pressure zone or extending into the housing interior. This enables the pump to be operated at relatively high speeds and pressures for lighter materials including slurries. The pump is also capable of handling very heavy materials, such as mortars, and even concrete quite adequately.

The inextensibility can be produced by reinforcement fibres which extend longitudinally, that is in the direction of movement of the deflectors and transverse thereto. The reinforcement is preferably near the surface remote from the chamber, to keep the inextensibility as close as possible to the deflector means and to reduce wear.

In a preferred construction those portions over which the deflectors do not run are provided with a reinforcement in the form of fibres which extend at an angle, for example 45°, to the direction of the longitudinal direction, these providing strength but allow flexing of the diaphragm. An additional flexible sheet may be provided on this face remote from the chamber, and secured at least at the inlet port end, to provide a wear sheet for the deflectors and to give adjustment to compensate for any inaccuracies in casting or in the thickness of the diaphragm and thus to ensure that the diaphragm fits snugly against the internal surfaces, when deflected by the deflector means.

In order to enable the diaphragm to be replaced readily, and to hold it securely, the diaphragm needs to be clamped properly. This is achieved by the housing including a first housing part having an internal surface and a peripheral first clamping surface surrounding the internal surface, and facing in substantially the same direction as the internal surface, and a second housing part having a peripheral second clamping surface clamping the periphery of the diaphragm against the first clamping surface.

The clamping surface on the first housing part advantageously includes a curved portion, which is preferably curbed along an arc centred upon the axis of rotation of a rotary member carrying the deflector means, such as rollers. The clamping surface will thus be generally concave, as viewed perpendicular to the direction of movement of the deflector means, and the clamping surface on the second housing part is of cooperating convex form.

The diaphragm is preferably moulded so that its shape is such that it remains substantially undistorted when it is clamped in place and before the deflectors are placed in contact with the surface of the diaphragm remote from the internal surface of the housing. This construction means that the diaphragm only has to flex a small amount. As indicated the reinforcement may include, in addition to the longitudinal fibres, other fibres which are arranged at an angle thereto in other parts of the diaphragm to give strength, but do allow the slight flexing necessary for the diaphragm to distort without stretching in the direction of movement of the deflectors.

Further, to reduce wear it is possible to provide means to cause the rollers to continue rotation, even when they are not in contact with the diaphragm.

An additional port may be provided in the chamber at a location intermediate the first and second ports, means being provided to set the deflector means in predetermined positions relative to the ports whereby the device can be used not as a pump, but as a diverter valve or multiport diaphragm valve. This is a simple construction of valve and the arrangement could be such that the pump is operated, first of all, as a pump, with the intermediate port shut off, and the intermediate port is then opened with the deflector means in a fixed position, so that flow will continue under syphon action.

In order that the invention may be more clearly understood the following description is given, merely by way of example, reference being made to the accompanying drawings, in which:—

Figure 1 is a section through one embodiment of pump made according to the invention;

Figure 2 is a section in two parts, the first on line A—A and the second on line B—B of the pump illustrated in Figure 1; and

Figure 3 is a perspective view of a diaphragm as used in the pump of Figures 1 and 2.

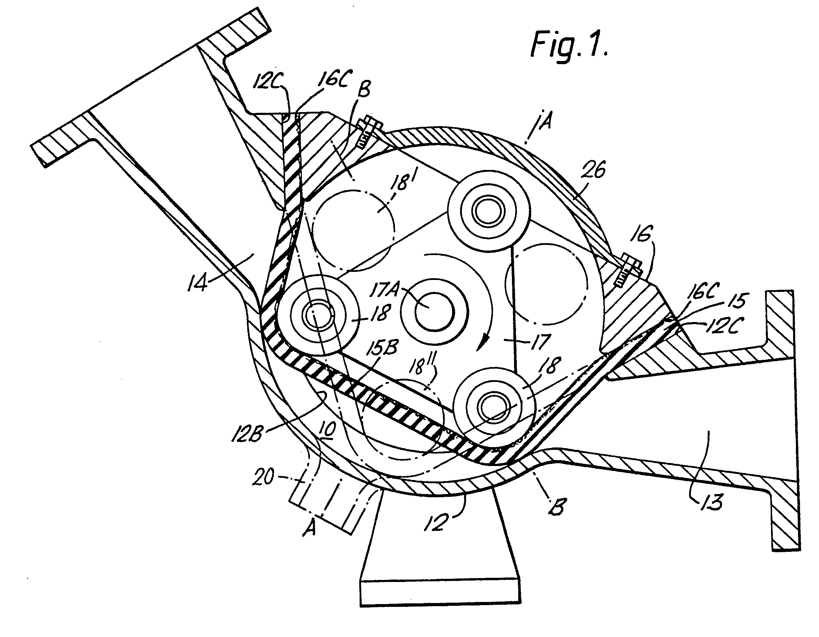

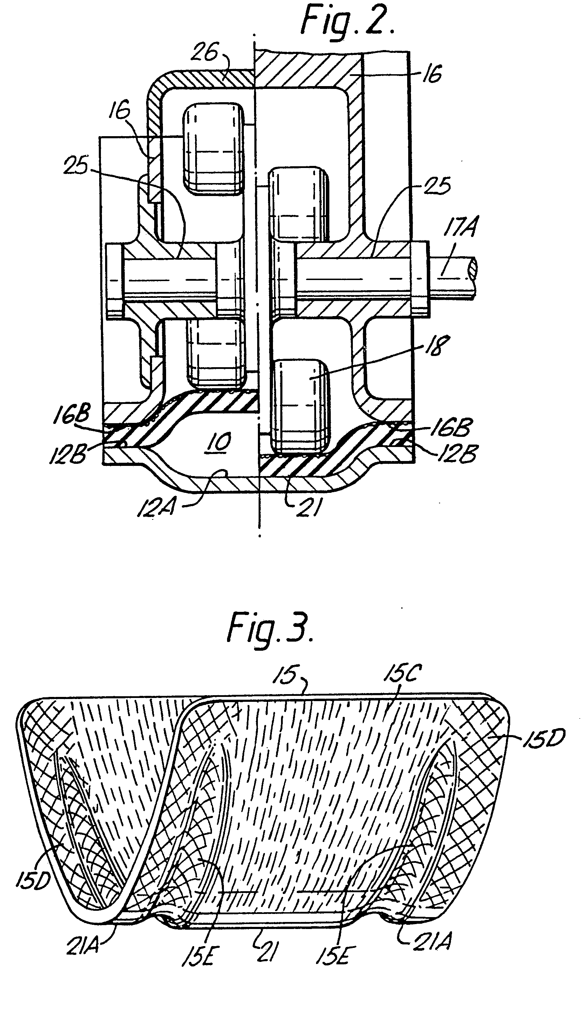

Referring first to Figures 1 and 2 of the drawings, the pump comprises a first housing part 12 and a second housing part 16 mounted thereon. The housing part 12 includes a central dished portion having an upper internal surface or curved portion 12A blending into a first port 13 and a second port 14. As can be seen from Figure 2, the curved portion 12A has associated therewith, on each side, a raised clamping surface which is formed by a curved surface 12B and straight surfaces 12C and which faces generally upwardly, that is in the same direction as the surface 12A. Curbed surfaces 12B end with a straight surface at 12C at each end which extends over the ports 13 and 14.

Thus, the clamping surfaces completely surround the periphery of the internal surface 12A and the ports 13 and 14.

The second housing part 16 is provided with surfaces 16B which cooperate with the curved surfaces 12B, and straight surfaces 16C which cooperate with the end portion of the surfaces 12C so that the surfaces 16B and 16C together define a second peripheral clamping surface. These clamping surfaces 12B, 12C and 16B, 16C, are used to clamp the edge portions of a diaphragm 15 which is of the premoulded structure illustrated in Figure 3. As will be seen it has a corrugation at 15E on each side and a central portion 21 which is lower than the edge portions 21A beyond the corrugations. The diaphragm is moulded with a reinforcement therein, including fibres 15C (Figure 3) which extend longitudinally, that is from left to right in Figure 1, in the central zone and includes other reinforcements 15D in other parts which are preferably at 45°, thus on the bias, to allow for some flexing, the longitudinal ones preventing extension in the longitudinal sense. These reinforcements are preferably placed on or just below the upper surface 15B.

Referring again to Figure 1 and 2, it will be seen that a rotary member 17 is rotatable about a central axis 17A and is mounted in bearings 25 in the second housing part 16. Member 17 carries three rollers 18 which can bear on the upper surface 15B of the diaphragm. The rollers urge the diaphragm at spaced locations towards, and preferably against, the upper surface 12A. In this condition, the surface 12A and the diaphragm lower surface form a pumping chamber 10.

The particular manner in which the diaphragm is mounted enables it to be held very firmly and prevents any tendency of the diaphragm to "walk" as the rotary member 17 rotates in the direction indicated by the arrow.

Because of the configuration of the pump, the effective length of the upper surface of the diaphragm remains constant. That is, the sum of the distances, measured along the diaphragm, between the clamping surfaces 12C, 16C at one end of the diaphragm, and the adjacent roller 18, and from that roller to the next roller, when two rollers are in contact with the diaphragm, and from the next roller to the other clamping surfaces 12C, 16C, remains constant regardless of the position of the rotor and regardless of whether one or two rollers are in contact. This means that the diaphragm need not elongate at all during the action of the rollers and it for this reason that it is possible to provide the reinforcement in the diaphragm. The reinforcement in the longitudinal direction indeed prevents the diaphragm from elongating and the reinforcement arranged on the bias prevents too much distortion, but allows an adequate amount for the flexure of the diaphragm under the action of the rollers 18. As the rotary member 17 rotates, the constricted or closed off chamber 10 is moved from the first port 13 to the second port 14, and because there are at least three rollers 18, the capsule thus formed is always isolated from at least one of the ports. Because the sum of the distances mentioned above is constant, a positive pumping action can take place in an adequate manner. It will be appreciated that the closure caused by one roller is terminated after the succeeding closure is initiated.

It will be appreciated that the diaphragm clamping surfaces 12B, 16B are so arranged that they partially form arcs of a circle with substantially the same centre as the rotary member. The rollers 18 are shown as being freely rotatable, but it is comtemplated that they could be caused to rotate continuously thus to reduce the wear on the upper surface. An additional wear sheet of flexible material may be secured above the diaphragm at the righthand side, as viewed in Figure 1, and extend over the full path covered by the rollers 18. This not only reduces wear, but can be used to adjust the thickness of the diaphragm to take up any manufacturing tolerances in the housing part 12.

The diaphragm is preferably moulded so that it naturally has the shape illustrated in Figure 3, that is with the lower and upper surfaces of the edge portions 21A having the same shape as the clamping surfaces 12B and 16B respectively.

The amount of moulded material adjacent to the rollers in the moulded and reinforced diaphragm on the surface 15B (the length of which remains substantially constant at all positions of the rollers) is such that it is only slightly in excess of that which allows the rollers to distort the diaphragm while avoiding rupture, but does not allow the diaphragm to deform further under negative pressure. The reinforcement in the diaphragm is not elastic and is moulded to the diaphragm at or near the surface on which the rollers make contact. This not only reinforces the diaphragm to cater for negative and positive pressure developed during the pumping cycle, but also reduces wear on the diaphragm due to the action of the rollers.

If the pump is provided with the modification indicated in phantom, that is with the intermediate port 20 at the centre of the chamber 10, that is at the centre of the surface 12A, then the device can be used as a valve, by moving the member 17 to the position in which the rollers take up the position 18' and 18" as illustrated in phantom. This connects the port 20 to the port 14 and disconnects the port 13. A similar symmetrical position could be assumed in which the port 13 is connected to the port 20 isolating the port 14. It is contemplated that if one rotates the member 17 continuously to cause pumping while shutting off the port 20, then the pump could be used to start off a syphon action, the pump then being moved to the other position communicating port 13 with port 20, allowing the syphon action to continue upon opening of the port 20.

It will be seen that the second housing part 16 is provided with a removable cover 26. One of the rollers 18 is also removably mounted on the member 17. The reason for this is that, because of the shaping of the diaphragm and the configuration of the pump, it is important to clamp the diaphragm around its full periphery before any of the rollers contact the diaphragm so that the diaphragm can take up its natural position without any distortion or strain thereon during the clamping. Thus, in order to mount a new diaphragm, the second housing part 16 is removed and the used diaphragm taken away and the new diaphragm put into position. The cover 26 is removed from the second housing part, and one of the rollers is then taken off. The member 17 is rotated until the other two rollers are at the top, that is so that the zone of the removed roller is at the bottom. The second housing part is then put in place and bolted down. The dimensions of the rotary member 17 are such that the zone adjacent where the roller which has been removed is located does not touch the diaphragm, so that during the clamping operation no disturbance of the diaphragm can take place. The rotary member is then rotated until the location of the removed roller is at the top and the roller put back in place whereafter the cover 26 can be fixed.

It has been found that unless this technique is used, the diaphragm is distorted and the pumping action possible with this pump reduces and indeed practically ceases.

It is thus important that the configuation of the pump should be chosen to give the necessary constant path length. This can be determined fully theoretically, but in practice it has been found possible to design the pump emperically by taking a piece of flexible inextensible material, such as cord, fitting around a model of the rotary member 17 and its rollers, and determining the position of the clamps which provide a fully tensioned cord at all times.

While the device has been described as a pump, it could equally well be used as a compressor or indeed as a motor.

The diaphragm must be flexible and substantially inextensible and is rendered so by reinforcement. The reinforcement illustrated includes a central portion with fibres 15C extending longitudinally only. In practice, however, the reinforcement shown only at the sides at 15D will extend across the full width of the diaphragm and the central portion will have a reinforcement made of an open mesh fabric which includes the longitudinal fibres 15C and other fibres (not shown) at right angles thereto, making the diaphragm laterally inextensible.

The construction of the diaphragm illustrated herein forms the subject of Application No. 83102339.5 which has been divided out of this Application.

## Claims

1. A material handling device comprising a flexible diaphragm (15), a housing including a first housing part (12) having an internal surface (12A) and a peripheral first clamping surface (12B, 12C), surrounding said internal surface, and facing generally in the same direction as said internal surface, and a second housing part (16) having a peripheral second clamping surface (16B 16C) clamping the periphery of said diaphragm (15) against the first clamping surface, the diaphragm forming, with said internal surface, a chamber (10), first and second ports (13, 14) communicating with said chamber, at least three spaced deflector means (18) each operable to be sequentially movable longitudinally of the diaphragm (15) on the face of said diaphragm remote from said chamber (10) so as to urge said diaphragm towards said internal surface (12A) to form a closure or constriction, which in use traverses the chamber, and which moves from the first to the second port, one such closure or constriction being terminated after the succeeding closure or restriction is initiated, characterised in that the flexible diaphragm (15) is longitudinally reinforced so as to be substantially longitudinally inextensible and in that the configuration of the device is such that, as said at least three deflector means (18) move sequentially along a path on said surface of the diaphragm remote from the chamber, the sum of the distances measured along the diaphragm, between the clamping points (12C, 16C) at the longitudinal ends of the diaphragm and the deflector means adjacent thereto and, where appropriate, between the adjacent deflector means in contact with the diaphragm, remains substantially constant.

2. A device according to claim 1, characterised in that said deflector means (18) are mounted on said second housing part (16), whereby they can be removed when the clamping of said diaphragm is released.

3. A device according to claim 1 or 2, characterised in that said deflector means are mounted on a rotary member (17) carried by said second housing part (16).

4. A device according to claim 1, 2 or 3, characterised in that said first and second clamping surfaces each comprise portions which are non-planar.

5. A device according to claim 3 and claim 4, characterised in that the internal surface (12A) and said portions of said clamping surfaces are each arcs of circles substantially centred on the axis of rotation of said rotary member.

6. A device according to claim 5, wherein the deflector means (18) comprise rollers mounted on said rotary member, characterised in that one of the rollers is removable and in that the portion of said rotary member from which said roller can be removed cannot then touch the diaphragm.

7. A device according to claim 5 or 6, characterised in that the diaphragm is pre-moulded to a shape so that its periphery corresponds to the shape of said portions of said clamping surfaces, so that when said diaphragm is placed on said clamping surfaces and clamped, it does not undergo any distortion.

8. A device according to claim 7, characterised in that the diaphragm comprises two longitudinal corrugations (15E) spaced from the longitudinal edges and projecting above the surface (15A) remote from the chamber (10).

9. A device according to claim 8, characterised in that a central portion (21) of the width of the diaphragm is moulded to take up a position nearer the internal surface (12A) than the edge portions on either side thereof, to give the correct sum of the distances measured along the diaphragm.

10. A device according to any preceding claim, characterised in that a flexible sheet is interposed between said diaphragm and said deflector means.

11. A device according to any preceding claim, characterised in that an intermediate port (20) communicating with said chamber (10) is located between said first and second ports (13, 14).

## Revendications

1. Dispositif de manutention de matériau comprenant un diaphragme flexible (15), un boîtier comportant une première partie de boîtier (12) possédant une surface interne (12A) et une première surface de pincement périphérique (12B, 12C) entourant ladite surface interne et orientée généralement dans la même direction que ladite surface interne et une seconde partie de boîtier (16) possédant une seconde surface de pincement périphérique (16B, 16C) pinçant la périphérie dudit diaphragme (15) contre la première surface de pincement, le diaphragme formant avec ladite surface interne une chambre (10), un premier et un second orifices (13, 14) communiquant avec ladite chambre, au moins trois moyens déflecteurs espacés (18) pouvant chacun être actionné pour être déplaçable séquentiellement longitudinalement par rapport au diaphragme (15) sur la face dudit diaphragme éloignée de ladite chambre (10) afin de presser ledit diaphragme vers ladite surface interne (12A) afin de former une fermeture ou un resserrement qui, en fonctionnement traverse la chambre, et qui se déplace du premier vers le second orifice, une telle fermeture ou resserrement prenant fin après que la fermeture ou le resserrement suivant soit débuté, caractérisé par le fait que le diaphragme flexible (15) est renforcé longitudinalement afin d'être sensible-ment inextensible longitudinalement et que la configuration du dispositif est telle que, lorsque lesdits moyens déflecteurs (18) se déplacent séquentiellement le long d'un trajet sur ladite surface du diaphragme éloignée de la chambre, la somme des distances mesurée le long du diaphragme, entre les points de pincement (12C, 16C) aux extrémités longitudinales du diaphragme et les moyens déflecteurs qui leur sont adjacents, et éventuellement entre les moyens déflecteurs adjacents en contact avec le diaphragme, reste sensiblement constante.

2. Dispositif selon la revendication 1, caractérisé par le fait que lesdits moyens déflecteurs (18) sont montés sur ladite seconde partie de boîtier (16) de sorte qu'ils peuvent être retirés lorsque le pincement dudit diaphragme est relâché.

3. Dispositif selon l'une quelconque des revendications 1 et 2, caractérisé par le fait que lesdits moyens déflecteurs sont montés sur un organe rotatif (17) porté par ladite seconde partie de boîtier (16).

4. Dispositif selon l'une quelconque des revendications 1 à 3, caractérisé par le fait que lesdites première et seconde surfaces de pincement comprennent chacune des parties non planes.

5. Dispositif selon les revendications 3 et 4, caractérisé par le fait que la surface interne (12A) et lesdites parties desdites surfaces de pincement sont chacune des arcs de cercle sensiblement centrés sur l'axe de rotation dudit organe rotatif.

6. Dispositif selon la revendication 5, dans lequel les moyens déflecteurs comprennent des galets montés sur ledit organe rotatif, caractérisé par le fait que l'un des galets est amovible et que la partie dudit organe rotatif de laquelle ledit galet peut être retiré ne peut pas ensuite toucher le diaphragme.

7. Dispositif selon l'une quelconque des revendications 5 et 6, caractérisé par le fait que le diaphragme est pré-moulé à une forme telle que sa périphérie correspond à la forme desdites parties desdites surfaces de pincement, de sorte que, lorsque ledit diaphragme est placé sur lesdites surfaces de pincement et pincé, il ne subit aucune déformation.

8. Dispositif selon la revendication 7, caractérisé par le fait que le diaphragme comprend deux ondulations longitudinales (15E) espacées des bords longitudinaux et s'étendant au-dessus de la surface (15A) éloignée de la chambre (10).

9. Dispositif selon la revendication 8, caractérisé par le fait qu'une partie centrale (21) de la largeur du diaphragme est moulée pour prendre une position plus proche de la surface interne (12A) que les parties de bord de chacun de ses côtés pour donner la somme convenable des distances mesurées le long du diaphragme.

10. Dispositif selon l'une quelconque des revendications précédentes, caractérisé par le fait qu'une feuille flexible est interposée entre ledit diaphragme et lesdits moyens déflecteurs.

11. Dispositif selon l'une quelconque des revendications précédentes, caractérisé par le fait qu'un orifice intermédiaire (20) communiquant avec ladite chambre (10) est disposé entre lesdits premier et second orifices (13, 14).

**Patentansprüche**

1. Einrichtung zum Handhaben von Material bestehend aus einer flexiblen Membran (15), einem Gehäuse mit einem ersten Gehäuseteil (12) mit einer inneren Oberfläche (12A) und einer die innere Oberfläche umgebenden peripherisch angeordneten ersten Klemmfläche (12B, 12C), die im allgemeinen in die gleiche Richtung weist, wie die innere Oberfläche, und einem zweiten Gehäuseteil (16) mit einer die Peripherie der Membran (15) gegen die erste Klemmfläche klemmenden peripherisch angeordneten zweiten Klemmfläche wobei die Membran mit der inneren Oberfläche eine Kammer (10) bildet, einer ersten und einer zweiten mit der Kammer in Verbindung befindlichen Öffnung (13, 14), mindestens drei räumlich auseinanderliegend angeordneten Durchbiegeeinrichtungen (18), die jeweils so betätigbar sind, daß sie nacheinander entlang der Membran (15) in Längsrichtung auf der der Kammer (10) abgelegenen Seite bewegbar sind, um die Membran in Richtung auf die innere Oberfläche (12A) zur Bildung einer Abschließung oder Einschnürung, die beim Betrieb die Kammer durchläuft, zu drängen und die von der ersten zur zweiten Öffnung läuft wobei eine solche Abschließung oder Einschnürung beendet wird, nachdem die folgende Abschließung oder Einschnürung initiiert wird, dadurch gekennzeichnet, daß die flexible Membran (15) in Längsrichtung verstärkt ist, so daß sie im wesentlichen in Längsrichtung undehnbar ist, und daß die Ausführung der Einrichtung so ist, daß die mindestens drei Durchbiegeeinrichtungen (18) nacheinander einen Weg auf der der Kammer entgegengesetzten Oberfläche entlanglaufen, wobei die Summe der entlang der Membran gemessenen Entfernungen zwischen den Klemmstellen (12C, 16C) an den Enden in Längsrichtung der Membran und den benachbarten Durchbiegeeinrichtungen und, wo anwendbar, zwischen den benachbarten in Kontakt mit der Membran befindlichen Durchbiegeeinrichtungen im wesentlichen konstant bleibt.

2. Einrichtung nach Anspruch 1, dadurch gekennzeichnet, daß die Durchbiegeeinrichtungen (18) auf dem zweiten Gehäuseteil (16) befestigt sind, wodurch sie entfernt werden können, wenn die Klemmung der Membran aufgehoben wird.

3. Einrichtung nach Anspruch 1 oder 2, dadurch gekennzeichnet, daß die Durchbiegeeinrichtungen auf einem rotierbaren Element (17) montiert sind, das von dem zweiten Gehäuseteil (16) getragen wird.

4. Einrichtung nach Anspruch 1, 2 oder 3, dadurch gekennzeichnet, daß die ersten und zweiten Klemmflächen nichtplanare Teile aufweisen.

5. Einrichtung nach Anspruch 3 und Anspruch 4, dadurch gekennzeichnet, daß die innere Oberfläche (12A) und die erwähnten Teile der Klemmflächen jeweils Bögen von Kreisen sind, die im wesentlichen die Rotationsachse des rotierbaren Elementes als Mittelpunkt haben.

6. Einrichtung nach Anspruch 5, bei der die Durchbiegeeinrichtungen (18) auf dem rotierbaren Element befestigte Rollen aufweisen, dadurch gekennzeichnet, daß eine der Rollen entfernbar ist und daß der Teil rotierbaren Elementes von dem die Rolle entfernt werden kann, die Membran nicht berühren kann.

7. Einrichtung nach Anspruch 5 oder 6, dadurch gekennzeichnet, daß die Membran in eine solche Form vorgeformt ist, daß ihre Peripherie der Form der erwähnten Teile der Klemmflächen entspricht, so daß, wenn die Membran auf die Klemmflächen plaziert wird und festgeklemmt wird, sie nicht verformt wird.

8. Einrichtung nach Anspruch 7, dadurch gekennzeichnet, daß die Membran zwei longitudinale Furchen (15E) aufweist, die von den Längsrändern räumlich entfernt angeordnet sind und sich über die der Kammer (10) abgewandte Oberfläche (15A) erheben.

9. Einrichtung nach Anspruch 8, dadurch gekennzeichnet, daß ein zentraler Teil (21) der Breite der Membran so geformt ist, daß er eine Lage näher an der inneren Oberfläche (12A) als die Randteile auf jeder Seite einnimmt, wodurch die korrekte Summe der entlang der Membran gemessenen Entfernungen gegeben wird.

10. Einrichtung nach einem der vorhergehenden Ansprüche, dadurch gekennzeichnet, daß eine flexible Folie zwischen der Membran und den Durchbiegeeinrichtungen angebracht wird.

11. Einrichtung nach einem der vorhergenden Ansprüche, dadurch gekennzeichnet, daß eine mit der Kammer (10) in Verbindung befindliche Zwischenöffnung (20) zwischen der ersten und zweiten Öffnung (13, 14) befindlich ist.

Fig.1.

## Fig. 2.

26

16

16

25

25

17A

18

16B

12B

16B

12B

12A

10

21

## Fig. 3.

15

15C

15D

15D

21A

15E

21

15E

21A